# FASCICULE DE BREVET EUROPEEN

(11) **EP 3 205 404 B1**
(45) Date de publication et mention de la délivrance du brevet: **05.08.2020**
(21) Numéro de dépôt: 17155059.3
(22) Date de dépôt: 07.02.2017
(51) Int. Cl.: B01L 3/00

(54) **PROCÉDÉ DE FABRICATION D'UN ÉLÉMENT FLUIDIQUE ET ÉLÉMENT FLUIDIQUE FABRIQUÉ À L'AIDE DUDIT PROCÉDÉ**
HERSTELLUNGSVERFAHREN EINES FLUIDELEMENTS, UND MIT DIESEM VERFAHREN HERGESTELLTES FLUIDELEMENT
METHOD FOR MANUFACTURING A FLUID ELEMENT AND FLUID ELEMENT MANUFACTURED BY MEANS OF SAID METHOD

(30) Priorité: 11.02.2016 FR 1651116
(43) Date de publication de la demande: 16.08.2017
(73) Titulaire: Commissariat à l'énergie atomique et aux énergies alternatives, 75015 Paris (FR)
(72) Inventeur: GROPPLERO DI TROPPENBURG, Giacomo, 38000 Grenoble (FR); DAVOUST, Laurent, 38610 Gieres (FR); FOUILLET, Yves, 38340 Voreppe (FR); REVOL-CAVALIER, Frédéric, 38180 Seyssins (FR)
(74) Mandataire: GIE Innovation Competence Group

(56) Documents cités:
- US-A1- 2012 238 008
- US-A1- 2015 079 668
- US-A1- 2015 367 342

## Description

### Domaine technique de l'invention

La présente invention se rapporte à un procédé de fabrication d'un élément fluidique et à l'élément fluidique fabriqué à l'aide dudit procédé.

### Etat de la technique

Par élément fluidique, on entend un élément qui présente une ou plusieurs zones perméables de manière à laisser passer un fluide, tel qu'un liquide ou un gaz, et des zones imperméables à ce fluide. Ce type d'élément sera notamment utile dans le domaine des laboratoires sur puce (« Lab on chip »). Certains éléments fluidiques sont ainsi déjà connus et différents procédés de fabrication ont été décrits dans l'état de la technique. Cependant, il s'avère que les éléments fluidiques obtenus sont souvent fragiles, difficiles et chers à fabriquer. C'est le cas des éléments fluidiques fabriqués selon les procédés décrits dans les articles suivants :
- Three-Dimensional Wax Patterning of Paper Fluidic Devices - Christophe Renault, Jessica Koehne, Antonio J. Ricco, and Richard M. Crooks*.*
- Ultra-rapid prototyping of flexible, multi-layered microfluidic devices via razor writing - Cosson S. *et al*
- Method for fabrication of microfluidic systems in glass - Stjemström M. *et al.*

Par ailleurs, il est connu des documents US2015/367342A1, US2015/079668A1 des solutions dans lesquelles un matériau poreux tel que le papier est imprégné d'un deuxième matériau préalablement chauffé tel que de la cire ou de l'encre, afin de créer dans la structure du papier des zones poreuses non hydrophobes et des zones hydrophobes. Ces solutions nécessitent cependant d'avoir recours à des moyens de chauffage pour assurer la fusion du matériau qui est ajouté et l'élément fluidique obtenu reste limité dans son domaine application.

Le but de l'invention est de proposer un procédé de fabrication d'un élément fluidique qui soit simple, fiable et peu coûteux et qui permette de fabriquer un élément fluidique présentant notamment des caractéristiques de souplesse et de déformabilité, lui permettant d'être employé dans de nombreuses applications. Selon un aspect de l'invention, le procédé de l'invention ne nécessitera pas forcément l'emploi de moyens de chauffage.

### Exposé de l'invention

Ce but est atteint par un procédé de fabrication d'un élément fluidique, qui consiste à former au moins une zone perméable et une zone imperméable à un fluide dans un matériau cellulaire tridimensionnel qui présente un degré de déformabilité élastique en compression et en extension compris entre 10% et 500% par rapport à une forme initiale, par l'ajout d'au moins un deuxième matériau présentant un état initial liquide et en ce que le matériau cellulaire tridimensionnel comporte des cellules ouvertes et est une mousse silicone ou une mousse polyuréthane et le deuxième matériau est un polymère, et en ce que le procédé comporte les étapes suivantes :
- Imbibition du matériau cellulaire par le deuxième matériau présent à l'état initial liquide,
- Evacuation du deuxième matériau présent dans son état initial liquide d'au moins une zone du matériau cellulaire, en vue de rendre ladite zone perméable.

Selon une particularité, l'étape d'évacuation est mise en œuvre par compression du matériau cellulaire imbibé au niveau de ladite zone.

Selon une particularité, l'étape d'imbibition est réalisée par compression pour faire pénétrer le deuxième matériau dans le matériau cellulaire.

Selon une particularité, le procédé comporte une étape de création d'au moins un motif dans ledit matériau cellulaire imbibé.

Selon une autre variante de réalisation, le procédé comporte les étapes suivantes :
- Création d'au moins une cavité dans le matériau cellulaire,
- Insertion du deuxième matériau dans ladite cavité en vue de former une zone imperméable par solidification du deuxième matériau.

Selon une variante de réalisation, ledit deuxième matériau est un polymère, par exemple un élastomère, ou un matériau polymère à base de silicone.

Selon une autre particularité, le procédé pourra comporter une étape de scellement d'au moins une partie de la surface du matériau cellulaire, par application d'une membrane imperméable au liquide sur ladite partie de la surface du matériau cellulaire.

L'invention concerne également un élément fluidique qui comporte au moins une zone imperméable et au moins une zone perméable à un fluide, obtenues grâce au procédé tel que défini ci-dessus.

L'invention concerne aussi une utilisation de cet élément fluidique dans une application de filtration d'un fluide par sa zone perméable.

L'invention concerne aussi une utilisation d'un élément fluidique tel que défini ci-dessus, dans une application de contrôle de l'écoulement d'un fluide par compression/décompression de sa zone perméable.

### Brève description des figures

D'autres caractéristiques et avantages vont apparaître dans la description détaillée qui suit faite en regard des dessins annexés dans lesquels :
- La figure 1 représente un élément fluidique conforme à l'invention.
- La figure 2 illustre de manière schématique les différentes étapes du procédé de fabrication de l'invention, selon une première variante de réalisation.
- La figure 3 illustre de manière schématique les différentes étapes du procédé de fabrication de l'invention, selon une deuxième variante de réalisation.
- La figure 4 illustre de manière schématique des étapes supplémentaires à mettre en œuvre dans le procédé de fabrication de l'invention, afin de sceller l'élément fluidique sur deux faces opposées.
- La figure 5 représente un exemple de découpe de l'élément fluidique, l'élément étant scellé sur sa face supérieure et sur sa face inférieure.
- Les figures 6A et 6B illustrent le principe d'un scellement partiel de l'élément fluidique.
- Les figures 7A et 7B illustrent une application d'un élément fluidique conforme à l'invention dans une solution de pompe péristaltique.

Sur les figures annexées, les différentes étapes décrites peuvent être illustrées par des vues de dessus (désignées VD), par des vues de côté (désignées VC) ou des vues en coupe (VCO).

### Description détaillée d'au moins un mode de réalisation

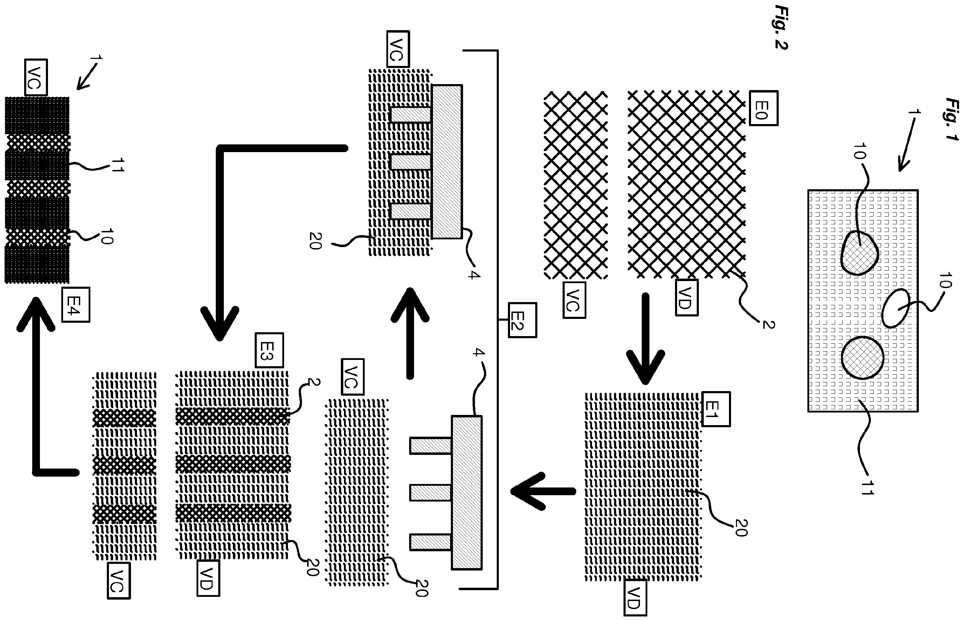

L'invention vise à réaliser un élément fluidique 1 destiné à véhiculer au moins un fluide, tel qu'un liquide ou un gaz, c'est-à-dire un élément qui présente au moins une zone perméable 10 pour laisser passer le fluide et au moins une zone imperméable 11 à ce fluide. Les zones perméables 10 créées définissent ainsi des chemins fluidiques dont la géométrie peut être contrôlée. Les chemins seront par exemple déformables pour, par exemple, pomper ou filtrer un fluide. La figure 1 représente un élément fluidique conforme à l'invention. Les zones perméables peuvent être vides, partiellement vides, ou constituées du matériau cellulaire de base qui sera défini ci-dessous.

La forme et les dimensions de chaque zone perméable et de chaque zone imperméable pourront être contrôlées par le procédé de fabrication mis en œuvre.

Dans un élément fluidique, plusieurs zones perméables peuvent être isolées entre elles ou communiquer entre elles par un ou plusieurs chemins fluidiques de jonction.

On entend par matériau cellulaire tridimensionnel, un matériau qui comporte plusieurs cellules organisées en une ou plusieurs couches superposées ou de manière aléatoire dans les trois dimensions.

Le procédé de l'invention est mis en œuvre à partir d'un matériau cellulaire. Ce matériau cellulaire est à cellules ou porosité ouverte, dont les alvéoles sont ouvertes sur les alvéoles voisines et sur l'extérieur.

Le procédé de l'invention s'applique plus particulièrement à un matériau cellulaire qui comporte au moins une partie à cellules ouvertes, présente nativement dans le matériau ou obtenue en ouvrant, par exemple par une attaque chimique ou thermique, des cellules fermées du matériau cellulaire.

Le matériau cellulaire employé sera avantageusement déformable. Par matériau déformable, on entend un matériau qui peut se déformer de manière élastique et qui présente un degré de déformabilité élastique, en compression ou extension, compris entre 10% et 500% par rapport à sa forme initiale, préférentiellement compris entre 50 et 200% par rapport à sa forme initiale.

Dans les matériaux cellulaires de type déformable, il s'agira par exemple :
- D'une mousse de type polyuréthane,
- D'une mousse de type silicone.

L'invention consiste à créer, à partir d'un matériau cellulaire de base tel que défini ci-dessus, une ou plusieurs zones perméables au fluide et une ou plusieurs zones imperméables au fluide. Pour cela, le procédé de l'invention consiste à ajouter au moins un deuxième matériau au matériau cellulaire. Selon l'invention, ce deuxième matériau est à mono-constituant ou à multi-constituants et présente un état initial liquide. Une évolution des propriétés physico-chimiques de ce deuxième matériau, une évaporation sur l'un de ses constituants (par exemple un solvant) ou un changement de phase liquide/solide de ce deuxième matériau dans le matériau cellulaire permet ensuite de créer un élément fluidique présentant une structure hétérogène de zones perméables et de zones imperméables au fluide.

Par état initial liquide, on entend un matériau qui présente un degré de viscosité suffisamment faible pour, lors de la mise en œuvre du procédé de fabrication de l'élément fluidique, pénétrer dans le matériau cellulaire ou venir remplir au moins partiellement une cavité du matériau cellulaire. Le deuxième matériau ajouté pourra être naturellement liquide à température ambiante (entre 10°C et 35°C par exemple) ou obtenu sous forme liquide, par exemple par fusion ou tout autre procédé.

Ce deuxième matériau, après solidification (obtenue après attente d'une durée suffisante), devra être également élastique et déformable, en compression et en extension, dans la même gamme que le premier matériau, c'est-à-dire avec un degré de déformabilité élastique compris entre 10% et 500% par rapport à sa forme initiale, préférentiellement compris entre 50 et 200% par rapport à sa forme initiale. Par ailleurs, il faut noter qu'il devra conserver ces caractéristiques mécaniques après association avec le premier matériau.

Le deuxième matériau sera :
- Un polymère, tel qu'un élastomère, ou un polymère à base de silicone, par exemple de type PDMS (pour Polydimethylsiloxane) ou ECOFLEX (marque déposée par la société « Smooth-On »), à base d'uréthane ou de sulfide.

De manière préférentielle, l'élément fluidique obtenu comporte au moins une zone perméable 10 au fluide, constituée du matériau cellulaire de base, dont le deuxième matériau défini ci-dessus a été évacué ou exclu, le reste de l'élément fluidique formant une zone imperméable 11 composée du matériau cellulaire dont la structure cellulaire a été modifiée par l'ajout du deuxième matériau afin de le rendre imperméable au fluide.

A l'issue du procédé de fabrication, c'est-à-dire notamment après solidification du deuxième matériau, l'élément fluidique obtenu sera déformable en compression et en extension avec un degré de déformabilité élastique compris entre 10% et 500% par rapport à sa forme initiale, préférentiellement compris entre 50 et 200% par rapport à sa forme initiale.

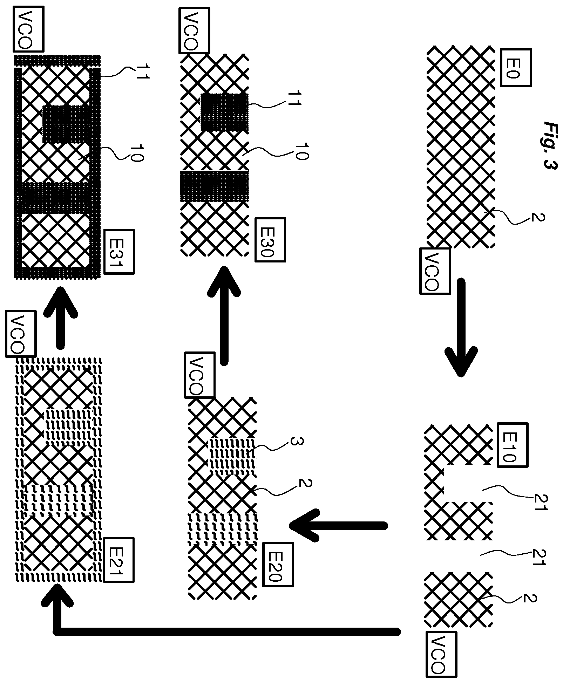

Selon l'invention, l'élément fluidique pourra être obtenu par différents procédés de fabrication. Les figures 2 et 3 illustrent deux procédés distincts permettant d'obtenir un élément fluidique conforme à l'invention. Bien entendu, il s'agit de deux exemples et d'autres procédés pourraient être imaginés pour obtenir un élément fluidique tel que décrit ci-dessus, c'est-à-dire composé d'une structure hétérogène de zones perméables et de zones imperméables, réalisée à partir d'un matériau cellulaire et d'un deuxième matériau tel que décrit ci-dessus.

Dans le procédé illustré par la figure 2, le matériau cellulaire est composé d'une mousse polyuréthane 2 à cellules ouvertes et le deuxième matériau est formé d'un élastomère liquide. La mousse polyuréthane 2 est initialement découpée selon la forme souhaitée, par exemple un parallélépipède rectangle (E0 sur la figure 2). L'élastomère est préparé dans une quantité suffisante pour imbiber totalement la mousse. Par exemple, il s'agira de prendre le volume de la mousse polyuréthane, de lui ajouter 20% et de prendre la masse d'élastomère équivalente à la masse d'eau de ce volume. Le procédé comporte ainsi les étapes suivantes :
**E1** : La mousse polyuréthane 2 est imbibée par l'élastomère présent sous forme liquide (par exemple à température ambiante) de manière à obtenir une mousse imbibée 20. L'imbibition peut se faire par exemple en déposant l'élastomère sur toutes les faces du volume formé par la mousse et en le faisant pénétrer par capillarité, par gravité, par compression, par dépôt en phase vapeur, par électrochimie ou par toute autre solution adaptée, dans le volume formé par la mousse. Cette étape d'imbibition doit être réalisée pendant la durée de manipulation préconisée par le fabricant de l'élastomère.
**E2** : L'élastomère est évacué de certaines zones de la mousse en vue de rendre ces zones perméables. Le reste de la mousse, qui est occupé par l'élastomère, sera destiné à former ainsi des zones imperméables 11. L'évacuation de l'élastomère est par exemple réalisée par compression à l'aide d'un moule 4 dont la forme détermine la forme des zones perméables 10 à obtenir.
**E3** : L'élastomère liquide initialement présent dans les zones comprimées par le moule 4 est évacué de la zone comprimée et ne peut revenir dans cette zone. La limitation du retour de l'élastomère dans une zone évacuée peut être réalisée de différentes manières :
   - En jouant sur la cinétique de fluage qui est moins rapide que le temps de réticulation de l'élastomère.
   - Par action sur le niveau de porosité de la zone évacuée ou des zones environnantes à la zone évacuée.
**E4** : Après avoir évacué l'élastomère liquide de certaines zones, la réticulation de l'élastomère présent sur le reste de la mousse, permet de créer un élément fluidique 1 qui présente une structure hétérogène faite de zones perméables 10 et de zones imperméables 11.

Par ailleurs, une étape supplémentaire pourra être ajoutée pour accélérer le durcissement de l'élastomère liquide, par trempe, refroidissement, chauffage ou par toute autre action externe.

Des éléments de compléments et/ou de modifications peuvent être apportés au procédé de fabrication décrit ci-dessus en liaison avec la figure 2. Ces éléments sont les suivants :
- L'évacuation de l'élastomère lors de l'étape E2 peut être réalisée par d'autres méthodes que la compression, par exemple par soufflage liquide et/ou gazeux localisé ou par aspiration localisée.
- Pendant la réticulation de l'élastomère liquide (entre l'étape E3 et l'étape E4), la mousse imbibée 20 peut être comprimée et maintenue en compression le temps de la réticulation, de manière à y créer des motifs. La mousse conservera ainsi la forme appliquée lors de la compression.
- L'évacuation par compression réalisée lors de l'étape E2 peut être réalisée à l'aide d'un seul moule 4 appliqué en compression ou de manière séquentielle à l'aide de plusieurs moules appliqués en compression de manière localisée sur la durée de manipulation de l'élastomère.
- L'étape d'imbibition (E1) peut être réalisée en injectant directement l'élastomère liquide dans la mousse 2 à l'aide d'une aiguille ou de toute autre solution équivalente.
- L'évacuation peut être remplacée par une simple exclusion, c'est-à-dire que le procédé est mis en œuvre de manière à ce que l'imbibition du matériau cellulaire par le deuxième matériau reste partielle, c'est-à-dire en empêchant que le deuxième matériau vienne occuper les zones du matériau cellulaire qui sont destinées à devenir des zones perméables. Il s'agira par exemple d'employer un masque particulier pour cibler les zones du matériau cellulaire à imbiber par le deuxième matériau.

La figure 3 illustre une variante de réalisation du procédé de l'invention. Dans cette variante, on utilise par exemple les mêmes constituants que pour le procédé décrit ci-dessus en liaison avec la figure 1.

E10 : La mousse 2 est découpée avec une forme particulière de manière à former des stries 21, traversantes ou non.

E20 : L'élastomère liquide 3 est déposé sur la mousse 2 de manière à venir se loger dans les stries 21.

E30 : Après réticulation, l'élastomère forme ainsi des parois imperméables au niveau de chaque strie occupée. On obtient une structure hétérogène formée de zones perméables 10 occupées par la mousse polyuréthane 2 et de zones imperméables 11 formées par les parois ainsi créées. L'emplacement et la forme des stries réalisées définissent les paramètres des chemins fluidiques à travers la mousse.

E21 et E31 : En variante aux étapes E20 et E30, la mousse 2 peut être totalement ou partiellement enrobée par l'élastomère liquide. Sur la figure 3, l'élastomère liquide recouvre ainsi toutes les faces de la mousse, permettant ainsi de l'isoler de l'extérieur.

L'élément fluidique obtenu pourra comporter les mêmes caractéristiques que celles décrites ci-dessus pour l'élément fluidique obtenu par le procédé décrit en liaison avec la figure 2.

D'autres alternatives aux deux solutions de procédé décrites ci-dessus peuvent également être envisagées, pour un résultat similaire. Ces alternatives sont les suivantes :
- Le deuxième matériau employé est un polymère photosensible. Les chemins fluidiques sont ainsi formés en exposant le polymère à un rayonnement particulier localisé ou à travers un masque.
- Le deuxième matériau est un polymère thermosensible. Les chemins fluidiques sont ainsi formés en échauffant le polymère de manière localisée.

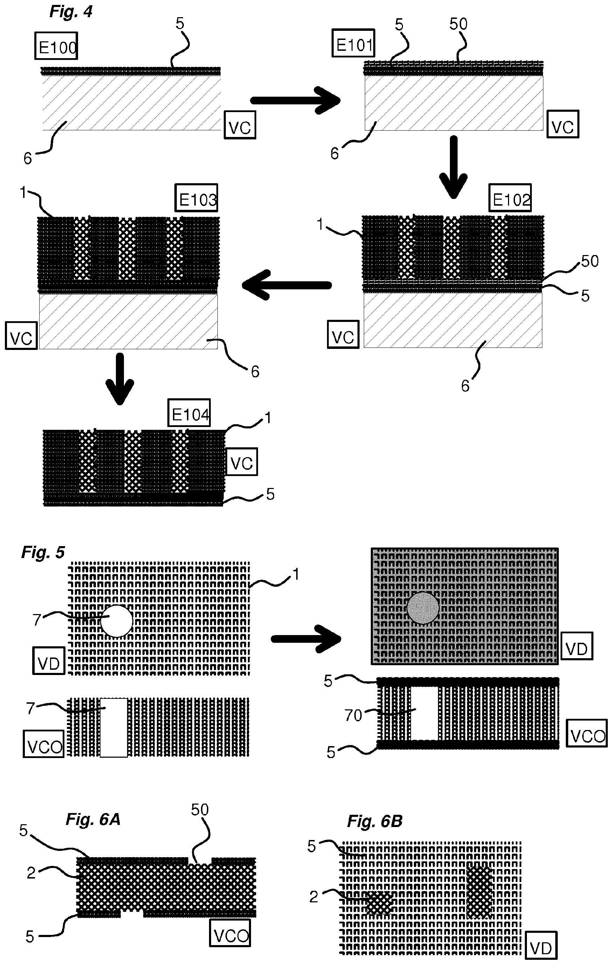

Selon l'invention, le procédé peut également comporter des étapes supplémentaires permettant de sceller l'élément fluidique formé, de manière à mieux le protéger. Il s'agira par exemple d'appliquer une membrane sur au moins une face de l'élément fluidique. Préférentiellement, il s'agira par exemple d'appliquer des membranes sur deux faces opposées de l'élément fluidique, par exemple sa face supérieure et sa face inférieure. La membrane sera par exemple composée d'un matériau de type élastomère, adhésif, colle, étirable ou non. La figure 4 illustre un exemple de mise en œuvre du scellement de l'élément fluidique. Il comporte les étapes suivantes :
E100 : Un élastomère liquide est déposé sur une surface plane d'un support 6, formant après réticulation, une membrane 5. Ce dépôt sera par exemple réalisé à la tournette.
E101 : une fois la membrane 5 formée, une couche 50 d'élastomère liquide non réticulé est déposée sur la membrane. En réticulant, cette couche va servir de colle.
E102 : L'élément fluidique 1 est déposé sur la couche 50 d'élastomère liquide. La réticulation de cette couche va permettre de coller l'élément fluidique 1 sur la membrane 5.
E103 : La couche 50 d'élastomère a réticulé, collant l'élément fluidique 1 à la membrane 5.
E104 : l'élément fluidique 1 scellé sur une de ses faces par la membrane 5 est ensuite retiré du support.

La même procédure de scellement peut être mise en œuvre pour la face opposée de l'élément fluidique 1. Les phases de scellement des deux faces opposées peuvent être mises en œuvre l'une après l'autre ou simultanément pour gagner du temps dans la fabrication.

En référence à la figure 5, il est possible de découper l'élément fluidique 1 avant son scellement. Il s'agira par exemple de créer une ouverture 7 à travers l'élément. Une fois l'élément fluidique 1 scellé sur sa face supérieure et sur sa face inférieure, cette ouverture forme une cavité 70 vidée de mousse et isolée de l'extérieur.

Dans une variante de réalisation représentée sur les figures 6A et 6B, le scellement peut être partiel de manière à ce qu'une membrane 5 ne recouvre pas toute la surface de l'élément. Une ou plusieurs ouvertures 50 peuvent ainsi être créées à travers la membrane 5. Il s'agira par exemple de mettre en contact une zone perméable 10 de l'élément fluidique 1 avec l'extérieur. Cela permettra par exemple de capter des composés présents à l'extérieur, comme des constituants biochimiques, des fluides d'intérêt ou des solides se présentant par exemple sous la forme de poudre.

L'élément fluidique 1 obtenu présente ainsi de nombreux avantages, parmi lesquels :
- Le matériau cellulaire employé étant préférentiellement une mousse, il est élastique, étirable en compression et en extension et souple. Il peut ainsi être manipulé et actionné sans risque de déchirures ou de ruptures dans la limite de déformabilité élastique de l'élément fluidique formé (voir caractéristiques de déformabilité élastique définies ci-dessus).
- Il est facilement pliable, ce qui permet de mettre en contact des zones non reliées par des canaux. En pliant l'élément, on peut relier deux zones perméables, sans avoir un canal à réaliser.
- Il forme une structure poreuse dans les trois dimensions, pouvant ainsi former une grande surface d'échange ou de capture avec un fluide extérieur.
- Grâce au scellement, il peut être facilement isolé de l'extérieur afin d'éviter les contaminations ou l'évaporation du fluide canalisé.
- Il est manipulable à la main ou à l'aide d'une machine.

Grâce à ces différents avantages, l'élément fluidique 1 de l'invention pourra être employé pour différentes applications, telles que par exemple :
- Fonctionnement en filtration : la mousse 2 de la zone perméable 10 peut être comprimée ou décomprimée. Le niveau de filtration peut être ajusté en jouant sur la porosité des zones perméables, donc par exemple sur la structure alvéolaire du matériau cellulaire.
- Fonctionnement péristaltique : aspiration/refoulement d'un liquide par compression/décompression de l'élément.
- Fonctionnement en vanne : blocage de l'écoulement par compression locale d'une zone perméable 10 de l'élément.
- Fonctionnement en laboratoire sur puce : toutes les fonctions fluidiques, c'est-à-dire par exemple écoulement, vanne, filtration, sont regroupées dans un seul dispositif en structurant l'élément de manière adaptée.
- L'élément fluidique peut embarquer un réactif, logé par exemple sous une forme liquide, gazeuse, ou d'une poudre dans une capsule, qui pourra être libéré ultérieurement selon l'application envisagée.

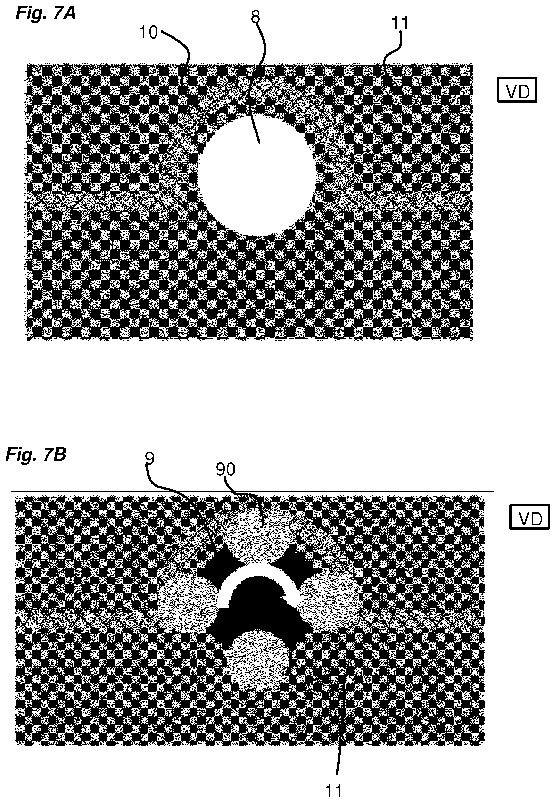

Les figures 7A et 7B illustrent une application d'un élément fluidique conforme à l'invention dans une solution de pompe péristaltique.

Pour cette application, l'élément fluidique présente par exemple la structure représentée sur la figure 7A dans laquelle l'élément fluidique comporte une zone perméable 10 formée d'un canal fluidique, le reste de l'élément fluidique étant une zone imperméable 11. Vu de dessus, le canal fluidique présente une forme en oméga. L'élément fluidique comporte également une ouverture 8 traversante réalisée dans le creux formé par l'oméga, suivant un axe transversal au passage du fluide dans le canal.

L'élément fluidique ainsi formé est assemblé à une tête 9 rotative pour former une solution de pompage péristaltique. La tête 9 rotative comporte plusieurs galets 90 sur son pourtour. Elle est actionnée en rotation suivant un axe de rotation sensiblement confondu avec l'axe de ladite ouverture 8.

En fonctionnement, la rotation de la tête 9 entraîne les galets 90 qui sont alors aptes à venir comprimer le canal fluidique. Le canal écrasé agit alors comme un tube déformable présent dans une pompe péristaltique classique, en déplaçant un volume de fluide entre chaque passage des galets. L'élasticité du canal fluidique permet une réversibilité de la déformation. Le débit fluidique varie de quelques microlitres par minute à plusieurs millilitres par minute, selon la vitesse de rotation appliquée à la tête.

## Revendications

1. Procédé de fabrication d'un élément fluidique (1), **caractérisé en ce qu'**il consiste à former au moins une zone perméable (10) et une zone imperméable (11) à un fluide dans un matériau cellulaire tridimensionnel qui présente un degré de déformabilité élastique en compression et en extension compris entre 10% et 500% par rapport à une forme initiale, par l'ajout d'au moins un deuxième matériau présentant un état initial liquide et **en ce que** le matériau cellulaire tridimensionnel comporte des cellules ouvertes et est une mousse silicone ou une mousse polyuréthane et le deuxième matériau est un polymère, et **en ce que** le procédé comporte les étapes suivantes :
- Imbibition du matériau cellulaire par le deuxième matériau présent à l'état initial liquide,
- Evacuation du deuxième matériau présent dans son état initial liquide d'au moins une zone du matériau cellulaire, en vue de rendre ladite zone perméable (10).

2. Procédé selon la revendication 1, **caractérisé en ce que** l'étape d'évacuation est mise en œuvre par compression du matériau cellulaire imbibé au niveau de ladite zone.

3. Procédé selon la revendication 1 ou 2, **caractérisé en ce que** l'étape d'imbibition est réalisée par compression pour faire pénétrer le deuxième matériau dans le matériau cellulaire.

4. Procédé selon l'une des revendications 1 à 3, **caractérisé en ce qu'**il comporte une étape de création d'au moins un motif dans ledit matériau cellulaire imbibé.

5. Procédé selon la revendication 1, **caractérisé en ce que** ledit deuxième matériau polymère est un élastomère.

6. Procédé selon la revendication 1, **caractérisé en ce que** ledit deuxième matériau polymère est à base de silicone.

7. Procédé selon l'une des revendications 1 à 6, **caractérisé en ce qu'**il comporte une étape de scellement d'au moins une partie de la surface du matériau cellulaire, par application d'une membrane imperméable au liquide sur ladite partie de la surface du matériau cellulaire.

8. Elément fluidique, **caractérisé en ce qu'**il comporte au moins une zone imperméable (11) et au moins une zone perméable (10) à un fluide, obtenues grâce au procédé tel que défini dans l'une des revendications 1 à 7.

9. Utilisation d'un élément fluidique tel que défini dans la revendication 8, pour la filtration d'un fluide par sa zone perméable (10).

10. Utilisation d'un élément fluidique tel que défini dans la revendication 8, pour contrôler l'écoulement d'un fluide par compression/décompression de sa zone perméable (10).

## Patentansprüche

1. Verfahren zur Herstellung eines Fluidelements (1), **dadurch gekennzeichnet, dass** es aus der Bildung mindestens einer für ein Fluid durchlässigen Zone (10) und einer für ein Fluid undurchlässigen Zone (11) in einem zellulären dreidimensionalen Material, das einen Grad der elastischen Verformbarkeit bei Kompression und bei Dehnung zwischen 10 % und 500 %, bezogen auf eine ursprüngliche Form, durch die Zugabe mindestens eines zweiten Materials mit einem flüssigen Anfangszustand aufweist, besteht, und dadurch, dass das zelluläre dreidimensionale Material offene Zellen umfasst und ein Siliconschaumstoff oder ein Polyurethanschaumstoff ist und das zweite Material ein Polymer ist, und dadurch, dass das Verfahren die folgenden Schritte umfasst:
- Tränken des zellulären Materials mit dem im flüssigen Anfangszustand vorliegenden zweiten Material,
- Abführen des in seinem flüssigen Anfangszustand vorliegenden zweiten Materials aus mindestens einer Zone des zellulären Materials, um die durchlässige Zone (10) bereitzustellen.

2. Verfahren nach Anspruch 1, **dadurch gekennzeichnet, dass** der Abführschritt durch Komprimieren des getränkten zellulären Materials im Bereich der Zone erfolgt.

3. Verfahren nach Anspruch 1 oder 2, **dadurch gekennzeichnet, dass** der Tränkschritt durch Komprimieren erfolgt, um das zweite Material in das zelluläre Material eindringen zu lassen.

4. Verfahren nach einem der Ansprüche 1 bis 3, **dadurch gekennzeichnet, dass** es einen Schritt der Bildung mindestens eines Musters im getränkten zellulären Material umfasst.

5. Verfahren nach Anspruch 1, **dadurch gekennzeichnet, dass** es sich beim zweiten polymeren Material um ein Elastomer handelt.

6. Verfahren nach Anspruch 1, **dadurch gekennzeichnet, dass** das zweite polymere Material siliconbasiert ist.

7. Verfahren nach einem der Ansprüche 1 bis 6, **dadurch gekennzeichnet, dass** es einen Schritt des Versiegelns mindestens eines Teils der Oberfläche des zellulären Materials durch das Auftragen einer flüssigkeitsundurchlässigen Membran auf den Teil der Oberfläche des zellulären Materials umfasst.

8. Fluidelement, **dadurch gekennzeichnet, dass** es mindestens eine für ein Fluid undurchlässige Zone (11) und eine für ein Fluid durchlässige Zone (10) umfasst, die durch das in einem der Ansprüche 1 bis 7 definierte Verfahren erhalten werden.

9. Verwendung eines in Anspruch 8 definierten Fluidelements zur Filtration eines Fluids durch seine durchlässige Zone (10).

10. Verwendung eines in Anspruch 8 definierten Fluidelements zur Steuerung des Ableitens eines Fluids durch Kompression/Dekompression seiner durchlässigen Zone (10).

## Claims

1. Process for manufacturing a fluidic element (1), **characterized in that** it consists in forming at least one fluid-permeable zone (10) and one fluid-impermeable zone (11) in a three-dimensional cellular material that has a degree of elastic deformability in compression and in extension of between 10% and 500% relative to an initial shape, by addition of at least one second material having a liquid initial state, and **in that** the three-dimensional cellular material comprises open cells and is a silicone foam or a polyurethane foam, and the second material is a polymer, and **in that** the process comprises the following steps:
- soaking of the cellular material by the second material present in the liquid initial state,
- evacuating the second material present in its liquid initial state from at least one zone of the cellular material, in order to render said permeable zone (10).

2. Process according to Claim 1, **characterized in that** the evacuating step is carried out by compression of the soaked cellular material in said zone.

3. Process according to Claim 1 or 2, **characterized in that** the soaking step is carried out by compression in order to make the second material penetrate into the cellular material.

4. Process according to one of Claims 1 to 3, **characterized in that** it comprises a step of creating at least one pattern in said soaked cellular material.

5. Process according to Claim 1, **characterized in that** said second polymer material is an elastomer.

6. Process according to Claim 1, **characterized in that** said second polymer material is based on silicone.

7. Process according to one of Claims 1 to 6, **characterized in that** it comprises a step of sealing at least one portion of the surface of the cellular material, by application of a membrane impermeable to the liquid on said portion of the surface of the cellular material.

8. Fluidic element, **characterized in that** it comprises at least one fluid-impermeable zone (11) and at least one fluid-permeable zone (10), which are obtained by means of the process as defined in one of Claims 1 to 7.

9. Use of a fluidic element as defined in Claim 8, for the filtration of a fluid through its permeable zone (10).

10. Use of a fluidic element as defined in Claim 8, for controlling the flow of a fluid by compression/decompression of its permeable zone (10).
